# EUROPEAN PATENT SPECIFICATION

(11) **EP 4 383 226 B1**
(45) Date of publication and mention of the grant of the patent: **14.05.2025**
(21) Application number: 22211325.0
(22) Date of filing: 05.12.2022
(51) Int. Cl.: G08G 1/00, B60Q 1/50

(54) **SYSTEM FOR INDICATING A CONNECTION BETWEEN AT LEAST TWO CARS**
SYSTEM ZUR ANZEIGE EINER VERBINDUNG ZWISCHEN MINDESTENS ZWEI AUTOS
SYSTÈME D'INDICATION D'UNE CONNEXION ENTRE AU MOINS DEUX VOITURES

(43) Date of publication of application: 12.06.2024
(73) Proprietor: Bayerische Motoren Werke Aktiengesellschaft, 80809 München (DE)
(72) Inventor: Zaki, Tarek, 81829 München (DE)

(56) References cited:
- US-A1- 2014 244 144
- US-A1- 2020 017 106
- US-A1- 2021 094 464
- US-B1- 10 252 721
- US-B1- 10 703 262
- US-B2- 10 220 768

## Description

The present invention relates to a system for indicating a connection between at least two cars.

Typically, in the case that two or more cars have a common destination or a common destination on the way, one or more car(s) is following a leading car. In such a case, none of the drivers of other cars in the surrounding of the two or more cars on the road are informed about this agreement between the drivers of the two or more cars. As a result, the drivers of the two or more cars typically drive at a critically short distance from each other to maintain the connection between each other.

In particular, the drivers of the two or more cars try to avoid that the intervisibility is interrupted by an intermediate vehicle such as a big van, and that the connection is disconnected due to traffic light.

The typical consequence of such interception between the two or more cars following each other is a hectic driving behavior of the respective drivers, which endangers the road safety. Another challenge of such a situation is that the driving behavior of the front driver is very often altered in such a use case in that, e.g., the driver sometimes drives slower than necessary, which may create an unnecessary traffic jam and/or the driver keeps looking at the rear/side mirrors more often (in count and durations) than usual, thereby interrupting him/herself from concentrating on the road, whereby the probability of accidents may increase.

US 10 252 721 B1 relates to a computer-implemented method and system for controlling vehicles in a vehicle convoy. The vehicles in the vehicle convoy include a following vehicle and a preceding vehicle positioned immediately ahead of the following vehicle. The method includes receiving vehicle convoy data about an environment surrounding the vehicle convoy, and detecting an intention of a remote vehicle to execute a cut-in maneuver into a path of the following vehicle. The method includes controlling a vehicle system of the following vehicle to project a status indication to a ground surface between the following vehicle and the preceding vehicle. Further, the method includes determining whether the cut-in maneuver is acceptable based on the intention of the remote vehicle and a distance between the following vehicle and the preceding vehicle, and controlling the following vehicle based on whether the cut-in maneuver is acceptable.

Further prior art is disclosed in US 2020/017106 A1, US 2021/094464 A1 and US 10 703 262 B1.

An object of the present invention is to provide a system by which the safety in road traffic can be enhanced.

The object is achieved by the features of claim 1. Further preferred embodiments of the invention are subject of the dependent claims.

According to an aspect, a system for indicating a connection between at least two cars according to an embodiment comprises
an input device configured to receive an input for triggering an establishment of a connection between the at least two cars,
a projecting device configured to project a light indicating the connection between the at least two cars by projecting a specific form and an image of/having the specific form, respectively, on the underlying ground between the at least two cars when the connection between the at least two cars is established, and
an output device configured to output a notification, in some embodiments a text message and/or a sound message, when the connection between the at least two cars is established.

Hereby, in some embodiments, the drivers of the at least two cars can be informed once the connection is established, while drivers of other cars can recognize that the at least two cars are connected and, hence, can adapt their driving behavior accordingly and/or increase their attention so that the safety in road traffic can be enhanced.

The system further comprises
an image capturing device configured to capture an image of a circumference of at least one of the at least two cars, and
an image processing device configured to process the image to detect the specific form and the image of/having the specific form, respectively, projected by the projecting device in the image, wherein
the projecting device is configured to change a shape of the specific form and/or a color of the specific form based on a driving condition of at least one of the at least two cars and to project the changed specific form and an image of/having the changed specific form, respectively, on the underlying ground between the at least two cars.

Hereby, in some embodiments, the drivers of the other cars can recognize that the at least two cars are connected even in case that the driving condition of at least one of the at least two cars changes.

In some embodiments, the image processing device is configured to process the image to determine the driving condition, in particular a driving condition in which the at least one of the at least two cars turns or changes a lane, of the at least one of the at least two cars.

In some embodiments, the image processing device is configured to process the image to detect a distance between the at least two cars and/or whether a car other than the at least two cars is present in between the at least two cars, and to determine that the connection between the at least two cars is interrupted if the distance is greater than a predetermined value and/or if the car other than the at least two cars is present in between the at least two cars, and
the projecting device is configured to stop the projection of the light indicating the connection between the at least two cars and to project a light indicating that the connection between the at least two cars is interrupted by projecting a dedicated form and an image of/having the dedicated form, respectively, on the underlying ground between the at least two cars if the image processing device determines that the connection between the at least two cars is interrupted.

Hereby, in some embodiments, the drivers of the other cars can recognize that a connection between the at least two cars has been interrupted and, hence, can foresee that the drivers of the at least two cars are likely to try to re-establish the connection, so that the drivers of the other cars can adapt their driving behavior accordingly and/or increase their attention.

In some embodiments, the output device is configured to output a notification, in some embodiments a text message and/or a sound message, that the connection between the at least two cars is interrupted if the image processing device determines that the connection between the at least two cars is interrupted.

Hereby, in some embodiments, the drivers of the at least two cars can be informed that the connection is interrupted.

In some embodiments, the output device is configured to output an instruction in terms of driving actions for enabling a re-establishing of the connection between the at least two cars if the image processing device determines that the connection between the at least two cars is interrupted.

Hereby, in some embodiments, re-establishing the connection can be facilitated for the drivers of the at least two cars and/or the time required for re-establishing the connection can be reduced.

In some embodiments, the system is configured to automatically re-establish the connection between the at least two cars if the image processing device determines that the connection between the at least two cars is interrupted and, thereafter, determines that the distance is smaller than the predetermined value and/or the car other than the at least two cars is no more present in between the at least two cars.

The input device comprises a first input unit assigned to one car of the at least two cars and at least one second input unit assigned to at least one other car of the at least two cars,
the output device comprises a first output unit assigned to the one car of the at least two cars and at least one second output unit assigned to the at least one other car of the at least two cars,
the image capturing device comprises a first image capturing unit assigned to the one car of the at least two cars and at least one second image capturing unit assigned to the at least one other car of the at least two cars,
the image processing device comprises a first image processing unit assigned to the one car of the at least two cars and at least one second image processing unit assigned to the at least one other car of the at least two cars,
the projecting device comprises a first projecting unit installed in the one car of the at least two cars and at least one second projecting unit installed in the at least one other car of the at least two cars, wherein
the first projecting unit and the at least one second projecting unit are each configured to project a respective part of the light indicating the connection between the at least two cars and/or the light indicating that the connection between the at least two cars is interrupted, or
the first projecting unit or the at least one second projecting unit is configured to project the light indicating the connection between the at least two cars and/or the light indicating that the connection between the at least two cars is interrupted, and
the system optionally further comprises a transmission device including a first transmission unit assigned to the one car of the at least two cars and at least one second transmission unit assigned to the at least one other car of the at least two cars, the first transmission unit and the at least one second transmission unit being configured to communicate with each other.

In some embodiments, the first image capturing unit is configured to capture an image of a circumference of the one car of the at least two cars,
the first image processing unit is configured to process the image captured by the first image capturing unit to identify the at least one other car of the at least two cars in the image,
the first output unit is configured to output a list of the at least one other car of the at least two cars identified by the first image processing unit,
the first input unit is configured to receive an input for selecting at least one other car of the list of the at least one other car for triggering the establishment of the connection between the one car and the at least one other car,
the first transmission unit is configured to transmit to the at least one second transmission unit a notification notifying that the one car requests establishing a connection between the one car and the at least one other car if the first input unit receives the input for selecting the at least one other car of the list of the at least one other car,
the at least one second output unit is configured to output the notification notifying that the one car requests establishing a connection between the one car and the at least one other car,
the at least one second input unit is configured to receive an input for accepting establishing the connection, and
the connection between the one car and the at least one other car is established if the at least one second input unit receives the input for accepting establishing the connection.

Hereby, in some embodiments, users are supported by the system in establishing the connection between the at least two cars.

The first projecting unit is configured to project a light indicating an offer for establishing a connection to the at least one other car of the at least two cars if the first input unit receives an input for triggering the establishment of the connection between the at least two cars,
the at least one second image capturing unit is configured to capture an image of the circumference of the at least one other car of the at least two cars,
the at least one second image processing unit is configured to process the image of the circumference of the at least one other car of the at least two cars to detect the projected light indicating the offer for establishing the connection to the at least one other car, and to identify the one car from which the light indicating the offer for establishing the connection to the at least one other car is projected,
the at least one second output unit is configured to output a notification, in some embodiments a text message and/or a sound message, that the one car offers establishing a connection to the at least one other car if the at least one second image processing unit detects the projected light indicating the offer for establishing the connection to the at least one other car,
the at least one second input unit is configured to receive an input for accepting establishing the connection, and
the connection between the one car and the at least one other car is established if the at least one second input unit receives the input for accepting establishing the connection.

Hereby, in some embodiments, users are supported by the system in establishing the connection between the at least two cars.

In some embodiments, the first image capturing unit is configured to capture an image of a circumference of the one car of the at least two cars,
the first image processing unit is configured to process the image captured by the first image capturing unit to identify the at least one other car of the at least two cars in the image,
the first output unit is configured to output a list of the at least one other car of the at least two cars identified by the first image processing unit, and
the first input unit is configured to receive an input for selecting at least one other car of the list of the at least one other car for triggering the establishment of the connection between the one car and the at least one other car, wherein
the connection between the one car and the at least one other car is established if the first input unit receives the input for selecting at least one other car of the list of the at least one other car for triggering the establishment of the connection between the one car and the at least one other car.

In some embodiments, the first projecting unit is configured to project the light indicating the connection between the one car and the at least one other car and/or the light indicating that the connection between the one car and the at least one other car is interrupted.

In some embodiments, the first image processing unit is configured to process the image to detect a distance between the one car and the at least one other car of the at least two cars and/or whether a car other than the one car and the at least one other car of the at least two cars is present in between the one car and the at least one other car of the at least two cars, and to determine that the connection between the one car and the at least one other car is interrupted if the distance is greater than the predetermined value and/or if the car other than the one car and the at least one other car of the at least two cars is present in between the one car and the at least one other car of the at least two cars, and
the first projecting unit is configured to stop the projection of the light indicating the connection between the one car and the at least one other car of the at least two cars and to project a light indicating that the connection between the one car and the at least one other car of the at least two cars is interrupted by projecting the dedicated form on the underlying ground between the one car and the at least one other car of the at least two cars if the first image processing unit determines that the connection between the one car and the at least one other car of the at least two cars is interrupted.

In some embodiments, the first output device is configured to output a notification, in some embodiments a text message and/or a sound message, that the connection between the one car and the at least one other car of the at least two cars is interrupted if the first image processing unit determines that the connection between the one car and the at least one other car of the at least two cars is interrupted.

Further advantages and features result from the dependent claims and the embodiment examples. For this purpose shows, partially schematized:
- Fig. 1: a system for indicating a connection between at least two cars according to an embodiment,
- Fig. 2: two cars between which a light having a specific form is projected by the system shown in Fig. 1,
- Fig. 3: the two cars shown in Fig. 2 between which a light having a changed specific form is projected by the system shown in Fig. 1,
- Fig. 4: the two cars shown in Figs. 2 and 3 between which a light having another changed specific form is projected by the system shown in Fig. 1, and
- Fig. 5: the two cars shown in Figs. 2, 3 and 4 between which another car is arranged and between which a light having a dedicated form is projected by the system shown in Fig. 1.

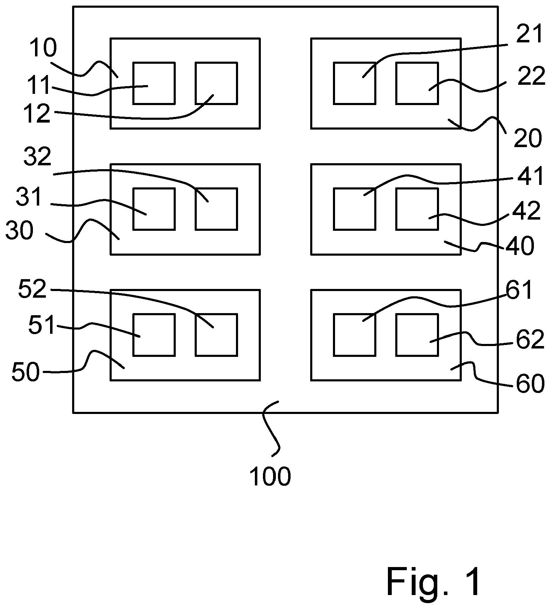

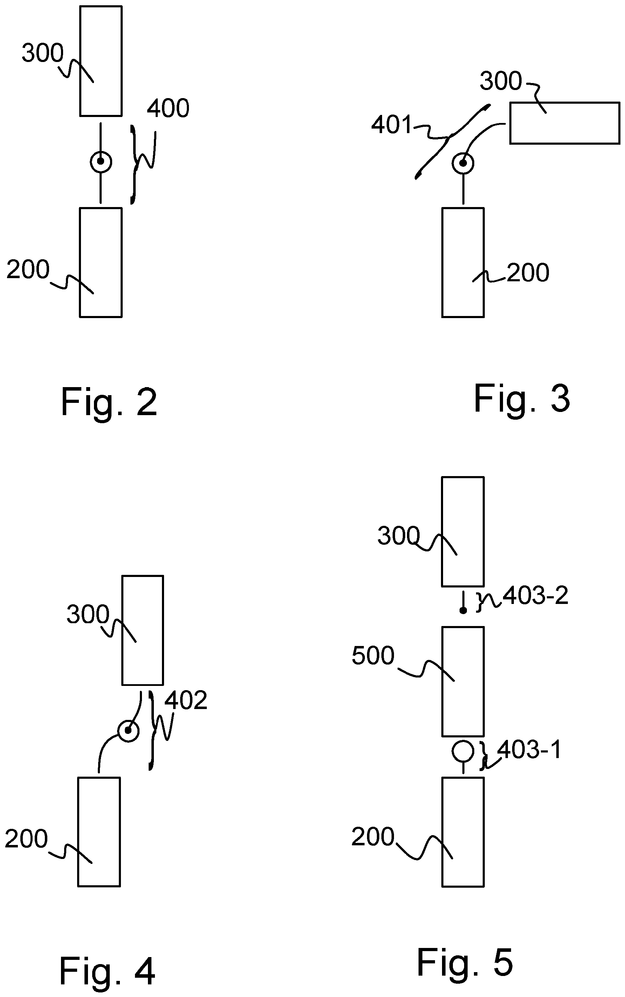

Fig. 1 shows a system 100 for indicating a connection between at least two cars 200, 300, Fig. 2 shows two cars 200, 300 between which a light having a specific form is projected by the system shown in Fig. 1, Fig. 3 shows the two cars 200, 300 shown in Fig. 2 between which a light having a changed specific form is projected by the system shown in Fig. 1, Fig. 4 shows the two cars 200, 300 shown in Figs. 2 and 3 between which a light having another changed specific form is projected by the system shown in Fig. 1, and Fig. 5 shows the two cars 200, 300 shown in Figs. 2, 3 and 4 between which another car 500 is arranged and between which a light having a dedicated form is projected by the system shown in Fig. 1.

The system 100 comprises an input device 10 configured to receive an input for triggering an establishment of a connection between the at least two cars 200, 300. The input device 10 comprises a first input unit 11 assigned to one car 200 of the at least two cars 200, 300 and at least one second input unit 12 assigned to at least one other car 300 of the at least two cars 200, 300.

In Fig. 1, a first input unit 11 assigned to the car 200 and only one second input unit 12 assigned to the car 300 are shown for the purpose of convenience. The first and/or second input units 11, 12 can be part of a head unit of the respective car 200, 300 and/or configured as a touch screen, e.g., as part of a smart device such as a smartphone.

The system 100 further comprises a projecting device 20, which comprises a first projecting unit 21 installed in the one car 200 and at least one second projecting unit 22 installed in the at least one other car 300 of the at least two cars, wherein only one second projecting unit 22 installed in the car 300 is shown for the purpose of convenience.

The projecting device 20 is configured to project a light indicating the connection between the at least two cars 200, 300 by projecting a specific form 400 and an image of/having a specific form 400, respectively, as e.g., shown in Fig. 2, on the underlying ground between the at least two cars 200, 300 when the connection between the at least two cars 200, 300 is established.

The system 100 further comprises an output device 50 configured to output a notification such as a text message and/or a sound message, when the connection between the at least two cars 200, 300 is established, wherein the output device 50 comprises a first output unit 51 assigned to the one car 200 and at least one second output unit 52 assigned to the at least one other car 300, wherein only one second output unit 52 assigned to the car 300 is shown for the purpose of convenience.

The first and/or second output units 51, 52 can be part of the head unit of the respective car 200, 300 and/or configured as the touch screen and/or configured as a speaker, e.g., as part(s) of the smart device such as the smartphone.

The system 100 further comprises an image capturing device 30 configured to capture an image of a circumference of at least one of the at least two cars 200, 300, and an image processing device 40 configured to process the image to detect the specific form 400 projected by the projecting device 20 in the image.

The image capturing device 30 comprises a first image capturing unit 31 assigned to the one car 200 and at least one second image capturing unit 32 assigned to the at least one other car 300 of the at least two cars 200, 300, and the image processing device 40 comprises a first image processing unit 41 assigned to the one car 200 and at least one second image processing unit 42 assigned to the at least one other car 300, wherein only one second image capturing unit 32 and only one second image processing unit 42 assigned to the car 300 are shown for the purpose of convenience.

The first and/or second image capturing unit(s) 31, 32, e.g., cameras, and/or the first and/or second image processing unit(s) 41, 42 may be installed in the one car 200 and/or the at least one other car 300 or may be part of the respective smart device(s).

The projecting device 20 is configured to change a shape of the specific form 400 and/or a color of the specific form 400 based on a driving condition of at least one of the at least two cars 200, 300 and to project the changed specific form 401, 402 and an image of/having the changed specific form 401, 402, respectively, which is, e.g., shown in Figs. 3 and 4, on the underlying ground between the at least two cars 200, 300.

Furthermore, the image processing device 40 is configured to process the image to determine the driving condition, in some embodiments a driving condition in which the at least one of the at least two cars 200, 300 turns or changes a lane, of the at least one of the at least two cars 200, 300.

In addition, the image processing device 40 is configured to process the image to detect a distance between the at least two cars 200, 300 and/or whether a car 500 other than the at least two cars 200, 300 is present in between the at least two cars 200, 300, and to determine that the connection between the at least two cars 200, 300 is interrupted if the distance is greater than a predetermined value and/or if the car 500 other than the at least two cars 200, 300 is present in between the at least two cars 200, 300,

Here, the projecting device 20 is configured to stop the projection of the light indicating the connection between the at least two cars 200, 300 and to project a light indicating that the connection between the at least two cars 200, 300 is interrupted by projecting a dedicated form 403-1, 403-2 on the underlying ground between the at least two cars 200, 300 if the image processing device 40 determines that the connection between the at least two cars 200, 300 is interrupted. Here, the dedicated form 403-1, 403-2 may be composed of two separated forms 403-1, 403-2 which are projected between the one car 200 and the car 500 other than the at least two cars 200, 300 and between the car 500 other than the at least two cars 200, 300 and the at least one other car 300, as shown in Fig. 5.

The output device 50 is configured to output a notification such as a text message and/or a sound message that the connection between the at least two cars 200, 300 is interrupted if the image processing device 40 determines that the connection between the at least two cars 200, 300 is interrupted.

Furthermore, the output device 50 is configured to output an instruction in terms of driving actions for enabling a re-establishing of the connection between the at least two cars 200, 300 if the image processing device 40 determines that the connection between the at least two cars 200, 300 is interrupted.

The system 100 is configured to automatically re-establish the connection between the at least two cars 200, 300 if the image processing device 40 determines that the connection between the at least two cars 200, 300 is interrupted and, thereafter, determines that the distance is smaller than the predetermined value and/or the car 500 other than the at least two cars 200, 300 is no more present in between the at least two cars 200, 300.

Referring back to Fig. 1, the system 100 further comprises a transmission device 60 including a first transmission unit 61 assigned to the one car of the at least two cars 200, 300 and at least one second transmission unit 62 assigned to the at least one other car 300 of the at least two cars 200, 300, the first transmission unit 61 and the at least one second transmission unit 62 being configured to communicate with each other.

In Fig. 1, a first transmission unit 61 assigned to the car 200 and only one second transmission unit 62 assigned to the car 300 are shown for the purpose of convenience. The first and/or second transmission unit(s) 61, 62 can be part of the head unit of the respective car 200, 300 and/or configured as an antenna of the smart device such as the smartphone.

The first image capturing unit 31 is configured to capture an image of a circumference of the one car 200 of the at least two cars 200, 300. The first image processing unit 41 is configured to process the image captured by the first image capturing unit 31 to identify the at least one other car of the at least two cars 200, 300 in the image, wherein the first output unit 51 is configured to output a list of the at least one other car of the at least two cars 200, 300 identified by the first image processing unit 41.

The first input unit 11 is configured to receive an input for selecting at least one other car of the list of the at least one other car 300 for triggering the establishment of the connection between the one car and the at least one other car 300, wherein the first transmission unit 61 is configured to transmit to the at least one second transmission unit 62 a notification notifying that the one car requests establishing a connection between the one car and the at least one other car if the first input unit 11 receives the input for selecting the at least one other car of the list of the at least one other car 300.

The at least one second output unit 52 is configured to output the notification notifying that the one car requests establishing a connection between the one car and the at least one other car, wherein the at least one second input unit 12 is configured to receive an input for accepting establishing the connection, and the connection between the one car and the at least one other car 300 is established if the at least one second input unit 12 receives the input for accepting establishing the connection.

Furthermore, the first projecting unit 21 is configured to project a light indicating an offer for establishing a connection to the at least one other car 300 of the at least two cars 200, 300 if the first input unit 11 receives an input for triggering the establishment of the connection between the at least two cars 200, 300.

Here, the at least one second image capturing unit 32 is configured to capture an image of the circumference of the at least one other car 300 of the at least two cars 200, 300, wherein the at least one second image processing unit 42 is configured to process the image of the circumference of the at least one other car 300 of the at least two cars 200, 300 to detect the projected light indicating the offer for establishing the connection to the at least one other car 300, and to identify the one car 200 from which the light indicating the offer for establishing the connection to the at least one other car 300 is projected.

The at least one second output unit 52 is configured to output a notification that the one car offers establishing a connection to the at least one other car 300 if the at least one second image processing unit 42 detects the projected light indicating the offer for establishing the connection to the at least one other car 300, the at least one second input unit 12 is configured to receive an input for accepting establishing the connection, and the connection between the one car and the at least one other car is established if the at least one second input unit 12 receives the input for accepting establishing the connection.

## Claims

1. System (100) for indicating a connection between at least two cars (200, 300), comprising
an input device (10) configured to receive an input for triggering an establishment of a connection between the at least two cars (200, 300),
a projecting device (20) configured to project a light indicating the connection between the at least two cars (200, 300) by projecting a specific form (400) on the underlying ground between the at least two cars (200, 300) when the connection between the at least two cars (200, 300) is established,
an output device (50) configured to output a notification when the connection between the at least two cars (200, 300) is established,
an image capturing device (30) configured to capture an image of a circumference of at least one of the at least two cars (200, 300), and
an image processing device (40) configured to process the image to detect the specific form (400) projected by the projecting device (20) in the image, wherein
the projecting device (20) is configured to change a shape of the specific form (400) and/or a color of the specific form (400) based on a driving condition of at least one of the at least two cars (200, 300) and to project the changed specific form (401, 402) on the underlying ground between the at least two cars (200, 300),
the input device (10) comprises a first input unit (11) assigned to one car (200) of the at least two cars (200, 300) and at least one second input unit (12) assigned to at least one other car (300) of the at least two cars (200, 300),
the output device (50) comprises a first output unit (51) assigned to the one car (200) of the at least two cars (200, 300) and at least one second output unit (52) assigned to the at least one other car (300) of the at least two cars (200, 300),
the image capturing device (30) device comprises a first image capturing unit (31) assigned to the one car (200) of the at least two cars (200, 300) and at least one second image capturing unit (32) assigned to the at least one other car (300) of the at least two cars (200, 300),
the image processing device (40) comprises a first image processing unit (41) assigned to the one car (200) of the at least two cars (200, 300) and at least one second image processing unit (42) assigned to the at least one other car (300) of the at least two cars (200, 300),
the projecting device (20) comprises a first projecting unit (21) installed in the one car (200) of the at least two cars (200, 300) and at least one second projecting unit (22) installed in the at least one other car (300) of the at least two cars (200, 300), wherein the first projecting unit (21) and the at least one second projecting unit (22) are each configured to project a respective part of the light indicating the connection between the at least two cars and/or of a light indicating that the connection between the at least two cars (200, 300) is interrupted, or
the first projecting unit (21) or the at least one second projecting unit (22) is configured to project the light indicating the connection between the at least two cars and/or the light indicating that the connection between the at least two cars (200, 300) is interrupted, and
the system (100) optionally further comprises a transmission device (60) including a first transmission unit (61) assigned to the one car (200) of the at least two cars (200, 300) and at least one second transmission unit (62) assigned to the at least one other car (300) of the at least two cars (200, 300), the first transmission unit (61) and the at least one second transmission unit (62) being configured to communicate with each other,
the first projecting unit (21) is configured to project a light indicating an offer for establishing a connection to the at least one other car (300) of the at least two cars (200, 300) if the first input unit (11) receives an input for triggering the establishment of the connection between the at least two cars (200, 300),
the at least one second image capturing unit (32) is configured to capture an image of the circumference of the at least one other car (300) of the at least two cars (200, 300),
the at least one second image processing unit (42) is configured to process the image of the circumference of the at least one other car (300) of the at least two cars (200, 300) to detect the projected light indicating the offer for establishing the connection to the at least one other car (300), and to identify the one car (200) from which the light indicating the offer for establishing the connection to the at least one other car (300) is projected,
the at least one second output unit (52) is configured to output a notification that the one car offers establishing a connection to the at least one other car (300) if the at least one second image processing unit (42) detects the projected light indicating the offer for establishing the connection to the at least one other car (300),
the at least one second input unit (12) is configured to receive an input for accepting establishing the connection, and
the connection between the one car and the at least one other car is established if the at least one second input unit (12) receives the input for accepting establishing the connection.

2. System (100) according to claim 1, wherein the image processing device (40) is configured to process the image to determine the driving condition, in particular a driving condition in which the at least one of the at least two cars (200, 300) turns or changes a lane, of the at least one of the at least two cars (200, 300).

3. System (100) according to claim 1 or 2, wherein the image processing device (40) is configured to process the image to detect a distance between the at least two cars (200, 300) and/or whether a car (500) other than the at least two cars (200, 300) is present in between the at least two cars (200, 300), and to determine that the connection between the at least two cars (200, 300) is interrupted if the distance is greater than a predetermined value and/or if the car (500) other than the at least two cars (200, 300) is present in between the at least two cars (200, 300), and
the projecting device (20) is configured to stop the projection of the light indicating the connection between the at least two cars (200, 300) and to project a light indicating that the connection between the at least two cars (200, 300) is interrupted by projecting a dedicated form (403-1, 403-2) on the underlying ground between the at least two cars (200, 300) if the image processing device (40) determines that the connection between the at least two cars (200, 300) is interrupted.

4. System (100) according to claim 3, wherein the output device (50) is configured to output a notification that the connection between the at least two cars (200, 300) is interrupted if the image processing device (40) determines that the connection between the at least two cars (200, 300) is interrupted.

5. System (100) according to claim 3 or 4, wherein the output device (50) is configured to output an instruction in terms of driving actions for enabling a re-establishing of the connection between the at least two cars (200, 300) if the image processing device (40) determines that the connection between the at least two cars (200, 300) is interrupted.

6. System (100) according to any one of claims 3 to 5, wherein the system (100) is configured to automatically re-establish the connection between the at least two cars (200, 300) if the image processing device (40) determines that the connection between the at least two cars (200, 300) is interrupted and, thereafter, determines that the distance is smaller than the predetermined value and/or the car (500) other than the at least two cars (200, 300) is no more present in between the at least two cars (200, 300).

7. The system according to any one of claims 1 to 6, wherein the first image capturing unit (31) is configured to capture an image of a circumference of the one car (200) of the at least two cars (200, 300),
the first image processing unit (41) is configured to process the image captured by the first image capturing unit (31) to identify the at least one other car of the at least two cars (200, 300) in the image,
the first output unit (51) is configured to output a list of the at least one other car of the at least two cars (200, 300) identified by the first image processing unit (41),
the first input unit (11) is configured to receive an input for selecting at least one other car of the list of the at least one other car (300) for triggering the establishment of the connection between the one car and the at least one other car (300),
the first transmission unit (61) is configured to transmit to the at least one second transmission unit (62) a notification notifying that the one car requests establishing a connection between the one car and the at least one other car if the first input unit (11) receives the input for selecting the at least one other car of the list of the at least one other car (300),
the at least one second output unit (52) is configured to output the notification notifying that the one car requests establishing a connection between the one car and the at least one other car,
the at least one second input unit (12) is configured to receive an input for accepting establishing the connection, and
the connection between the one car and the at least one other car (300) is established if the at least one second input unit (12) receives the input for accepting establishing the connection.

## Patentansprüche

1. System (100) zum Anzeigen einer Verbindung zwischen mindestens zwei Kraftfahrzeugen (200, 300), umfassend eine Eingabevorrichtung (10), die dazu ausgelegt ist, eine Eingabe zum Auslösen einer Herstellung einer Verbindung zwischen den mindestens zwei Kraftfahrzeugen (200, 300) zu empfangen,
eine Projektionsvorrichtung (20), die dazu ausgelegt ist, ein Licht, das die Verbindung zwischen den mindestens zwei Kraftfahrzeugen (200, 300) anzeigt, durch Projizieren einer spezifischen Form (400) auf den darunterliegenden Boden zwischen den mindestens zwei Kraftfahrzeugen (200, 300) zu projizieren, wenn die Verbindung zwischen den mindestens zwei Kraftfahrzeugen (200, 300) hergestellt ist,
eine Ausgabevorrichtung (50), die dazu ausgelegt ist, eine Benachrichtigung auszugeben, wenn die Verbindung zwischen den mindestens zwei Kraftfahrzeugen (200, 300) hergestellt ist,
eine Bilderfassungsvorrichtung (30), die dazu ausgelegt ist, ein Bild eines Umfangs von mindestens einem der mindestens zwei Kraftfahrzeuge (200, 300) zu erfassen, und
eine Bildverarbeitungsvorrichtung (40), die dazu ausgelegt ist, das Bild zu verarbeiten, um die spezifische Form (400) zu detektieren, die durch die Projektionsvorrichtung (20) in das Bild projiziert wird, wobei
die Projektionsvorrichtung (20) dazu ausgelegt ist, eine Form der spezifischen Form (400) und/oder eine Farbe der spezifischen Form (400) basierend auf einem Fahrzustand mindestens eines der mindestens zwei Kraftfahrzeuge (200, 300) zu ändern und die geänderte spezifische Form (401, 402) auf den darunterliegenden Boden zwischen den mindestens zwei Kraftfahrzeugen (200, 300) zu projizieren,
die Eingabevorrichtung (10) eine erste Eingabeeinheit (11), die einem Kraftfahrzeug (200) der mindestens zwei Kraftfahrzeuge (200, 300) zugeordnet ist, und mindestens eine zweite Eingabeeinheit (12), die mindestens einem anderen Kraftfahrzeug (300) der mindestens zwei Kraftfahrzeuge (200, 300) zugeordnet ist, umfasst,
die Ausgabevorrichtung (50) eine erste Ausgabeeinheit (51), die dem einen Kraftfahrzeug (200) der mindestens zwei Kraftfahrzeuge (200, 300) zugeordnet ist, und mindestens eine zweite Ausgabeeinheit (52), die dem mindestens einen anderen Kraftfahrzeug (300) der mindestens zwei Kraftfahrzeuge (200, 300) zugeordnet ist, umfasst,
die Bilderfassungsvorrichtung (30) eine erste Bilderfassungseinheit (31), die dem einen Kraftfahrzeug (200) der mindestens zwei Kraftfahrzeuge (200, 300) zugeordnet ist, und mindestens eine zweite Bilderfassungseinheit (32), die dem mindestens einen anderen Kraftfahrzeug (300) der mindestens zwei Kraftfahrzeuge (200, 300) zugeordnet ist, umfasst,
die Bildverarbeitungsvorrichtung (40) eine erste Bildverarbeitungseinheit (41), die dem einen Kraftfahrzeug (200) der mindestens zwei Kraftfahrzeuge (200, 300) zugeordnet ist, und mindestens eine zweite Bildverarbeitungseinheit (42), die dem mindestens einen anderen Kraftfahrzeug (300) der mindestens zwei Kraftfahrzeuge (200, 300) zugeordnet ist, umfasst,
die Projektionsvorrichtung (20) eine erste Projektionseinheit (21), die in dem einen Kraftfahrzeug (200) der mindestens zwei Kraftfahrzeuge (200, 300) installiert ist, und mindestens eine zweite Projektionseinheit (22), die in dem mindestens einen anderen Kraftfahrzeug (300) der mindestens zwei Kraftfahrzeuge (200, 300) installiert ist, umfasst, wobei die erste Projektionseinheit (21) und die mindestens eine zweite Projektionseinheit (22) jeweils dazu ausgelegt sind, einen jeweiligen Teil des Lichts, das die Verbindung zwischen den mindestens zwei Kraftfahrzeugen anzeigt, und/oder eines Lichts, das anzeigt, dass die Verbindung zwischen den mindestens zwei Kraftfahrzeugen (200, 300) unterbrochen ist, zu projizieren, oder
die erste Projektionseinheit (21) oder die mindestens eine zweite Projektionseinheit (22) dazu ausgelegt ist, das Licht, das die Verbindung zwischen den mindestens zwei Kraftfahrzeugen anzeigt, und/oder das Licht, das anzeigt, dass die Verbindung zwischen den mindestens zwei Kraftfahrzeugen (200, 300) unterbrochen ist, zu projizieren, und
das System (100) optional ferner eine Übertragungsvorrichtung (60) umfasst, die eine erste Übertragungseinheit (61), die dem einen Kraftfahrzeug (200) der mindestens zwei Kraftfahrzeuge (200, 300) zugeordnet ist, und mindestens eine zweite Übertragungseinheit (62), die dem mindestens einen anderen Kraftfahrzeug (300) der mindestens zwei Kraftfahrzeuge (200, 300) zugeordnet ist, umfasst, wobei die erste Übertragungseinheit (61) und die mindestens eine zweite Übertragungseinheit (62) dazu ausgelegt sind, miteinander zu kommunizieren,
die erste Projektionseinheit (21) dazu ausgelegt ist, ein Licht, das ein Angebot zum Herstellen einer Verbindung mit dem mindestens einen anderen Kraftfahrzeug (300) der mindestens zwei Kraftfahrzeuge (200, 300) anzeigt, zu projizieren, falls die erste Eingabeeinheit (11) eine Eingabe zum Auslösen der Herstellung der Verbindung zwischen den mindestens zwei Kraftfahrzeugen (200, 300) empfängt,
die mindestens eine zweite Bilderfassungseinheit (32) dazu ausgelegt ist, ein Bild des Umfangs des mindestens einen anderen Kraftfahrzeugs (300) der mindestens zwei Kraftfahrzeuge (200, 300) zu erfassen,
die mindestens eine zweite Bildverarbeitungseinheit (42) dazu ausgelegt ist, das Bild des Umfangs des mindestens einen anderen Kraftfahrzeugs (300) der mindestens zwei Kraftfahrzeuge (200, 300) zu verarbeiten, um das projizierte Licht, das das Angebot zum Herstellen der Verbindung mit dem mindestens einen anderen Kraftfahrzeug (300) anzeigt, zu detektieren und das eine Kraftfahrzeug (200), von dem das Licht, das das Angebot zum Herstellen der Verbindung mit dem mindestens einen anderen Kraftfahrzeug (300) anzeigt, projiziert wird, zu identifizieren,
die mindestens eine zweite Ausgabeeinheit (52) dazu ausgelegt ist, eine Benachrichtigung auszugeben, dass das eine Kraftfahrzeug das Herstellen einer Verbindung mit dem mindestens einen anderen Kraftfahrzeug (300) anbietet, falls die mindestens eine zweite Bildverarbeitungseinheit (42) das projizierte Licht, das das Angebot zum Herstellen der Verbindung mit dem mindestens einen anderen Kraftfahrzeug (300) anzeigt, detektiert,
die mindestens eine zweite Eingabeeinheit (12) dazu ausgelegt ist, eine Eingabe zum Akzeptieren der Herstellung der Verbindung zu empfangen, und
die Verbindung zwischen dem einen Kraftfahrzeug und dem mindestens einen anderen Kraftfahrzeug hergestellt wird, falls die mindestens eine zweite Eingabeeinheit (12) die Eingabe zum Akzeptieren der Herstellung der Verbindung empfängt.

2. System (100) nach Anspruch 1, wobei die Bildverarbeitungsvorrichtung (40) dazu ausgelegt ist, das Bild zu verarbeiten, um den Fahrzustand, insbesondere einen Fahrzustand, in dem das mindestens eine der mindestens zwei Kraftfahrzeuge (200, 300) abbiegt oder eine Spur wechselt, des mindestens einen der mindestens zwei Kraftfahrzeuge (200, 300) zu bestimmen.

3. System (100) nach Anspruch 1 oder 2, wobei die Bildverarbeitungsvorrichtung (40) dazu ausgelegt ist, das Bild zu verarbeiten, um einen Abstand zwischen den mindestens zwei Kraftfahrzeugen (200, 300) zu detektieren und/oder ob sich ein anderes Kraftfahrzeug (500) als die mindestens zwei Kraftfahrzeuge (200, 300) zwischen den mindestens zwei Kraftfahrzeugen (200, 300) befindet, und um zu bestimmen, dass die Verbindung zwischen den mindestens zwei Kraftfahrzeugen (200, 300) unterbrochen ist, falls der Abstand größer als ein vorbestimmter Wert ist und/oder falls sich das andere Fahrzeug (500) als die mindestens zwei Kraftfahrzeuge (200, 300) zwischen den mindestens zwei Kraftfahrzeugen (200, 300) befindet, und die Projektionsvorrichtung (20) dazu ausgelegt ist, die Projektion des Lichts, das die Verbindung zwischen den mindestens zwei Kraftfahrzeugen (200, 300) anzeigt, zu stoppen und ein Licht zu projizieren, das anzeigt, dass die Verbindung zwischen den mindestens zwei Kraftfahrzeugen (200, 300) unterbrochen ist, indem eine dedizierte Form (403-1, 403-2) auf den darunterliegenden Boden zwischen den mindestens zwei Kraftfahrzeugen (200, 300) projiziert wird, falls die Bildverarbeitungsvorrichtung (40) bestimmt, dass die Verbindung zwischen den mindestens zwei Kraftfahrzeugen (200, 300) unterbrochen ist.

4. System (100) nach Anspruch 3, wobei die Ausgabevorrichtung (50) dazu ausgelegt ist, eine Benachrichtigung auszugeben, dass die Verbindung zwischen den mindestens zwei Kraftfahrzeugen (200, 300) unterbrochen ist, falls die Bildverarbeitungsvorrichtung (40) bestimmt, dass die Verbindung zwischen den mindestens zwei Kraftfahrzeugen (200, 300) unterbrochen ist.

5. System (100) nach Anspruch 3 oder 4, wobei die Ausgabevorrichtung (50) dazu ausgelegt ist, eine Anweisung in Bezug auf Fahraktionen auszugeben, um ein Wiederherstellen der Verbindung zwischen den mindestens zwei Kraftfahrzeugen (200, 300) zu ermöglichen, falls die Bildverarbeitungsvorrichtung (40) bestimmt, dass die Verbindung zwischen den mindestens zwei Kraftfahrzeugen (200, 300) unterbrochen ist.

6. System (100) nach einem der Ansprüche 3 bis 5, wobei das System (100) dazu ausgelegt ist, die Verbindung zwischen den mindestens zwei Kraftfahrzeugen (200, 300) automatisch wiederherzustellen, falls die Bildverarbeitungsvorrichtung (40) bestimmt, dass die Verbindung zwischen den mindestens zwei Kraftfahrzeugen (200, 300) unterbrochen ist, und danach bestimmt, dass der Abstand kleiner als der vorbestimmte Wert ist und/oder sich das andere Fahrzeug (500) als die mindestens zwei Kraftfahrzeuge (200, 300) nicht mehr zwischen den mindestens zwei Kraftfahrzeugen (200, 300) befindet.

7. System nach einem der Ansprüche 1 bis 6, wobei die erste Bilderfassungseinheit (31) dazu ausgelegt ist, ein Bild eines Umfangs des einen Kraftfahrzeugs (200) der mindestens zwei Kraftfahrzeuge (200, 300) zu erfassen,
wobei die erste Bildverarbeitungseinheit (41) dazu ausgelegt ist, das durch die erste Bilderfassungseinheit (31) erfasste Bild zu verarbeiten, um das mindestens eine andere Kraftfahrzeug der mindestens zwei Kraftfahrzeuge (200, 300) in dem Bild zu identifizieren,
wobei die erste Ausgabeeinheit (51) dazu ausgelegt ist, eine Liste des mindestens einen anderen Kraftfahrzeugs der mindestens zwei Kraftfahrzeuge (200, 300), das durch die erste Bildverarbeitungseinheit (41) identifiziert wurde, auszugeben,
wobei die erste Eingabeeinheit (11) dazu ausgelegt ist, eine Eingabe zum Auswählen mindestens eines anderen Kraftfahrzeugs aus der Liste des mindestens einen anderen Kraftfahrzeugs (300) zum Auslösen der Herstellung der Verbindung zwischen dem einen Kraftfahrzeug und dem mindestens einen anderen Kraftfahrzeug (300) zu empfangen,
wobei die erste Übertragungseinheit (61) dazu ausgelegt ist, an die mindestens eine zweite Übertragungseinheit (62) eine Benachrichtigung zu übertragen, die darüber benachrichtigt, dass das eine Kraftfahrzeug das Herstellen einer Verbindung zwischen dem einen Kraftfahrzeug und dem mindestens einen anderen Kraftfahrzeug anfordert, falls die erste Eingabeeinheit (11) die Eingabe zum Auswählen des mindestens einen anderen Kraftfahrzeugs aus der Liste des mindestens einen anderen Kraftfahrzeugs (300) empfängt,
wobei die mindestens eine zweite Ausgabeeinheit (52) dazu ausgelegt ist, die Benachrichtigung auszugeben, die darüber benachrichtigt, dass das eine Kraftfahrzeug das Herstellen einer Verbindung zwischen dem einen Kraftfahrzeug und dem mindestens einen anderen Kraftfahrzeug anfordert,
wobei die mindestens eine zweite Eingabeeinheit (12) dazu ausgelegt ist, eine Eingabe zum Akzeptieren der Herstellung der Verbindung zu empfangen, und
wobei die Verbindung zwischen dem einen Kraftfahrzeug und dem mindestens einen anderen Kraftfahrzeug (300) hergestellt wird, falls die mindestens eine zweite Eingabeeinheit (12) die Eingabe zum Akzeptieren der Herstellung der Verbindung empfängt.

## Revendications

1. Système (100) pour indiquer une connexion entre au moins deux voitures (200, 300), comprenant
un dispositif d'entrée (10) configuré pour recevoir une entrée pour déclencher un établissement d'une connexion entre les au moins deux voitures (200, 300),
un dispositif de projection (20) configuré pour projeter une lumière indiquant la connexion entre les au moins deux voitures (200, 300) en projetant une forme spécifique (400) sur le sol sous-jacent entre les au moins deux voitures (200, 300) lorsque la connexion entre les au moins deux voitures (200, 300) est établie,
un dispositif de sortie (50) configuré pour sortir une notification lorsque la connexion entre les au moins deux voitures (200, 300) est établie,
un dispositif de capture d'image (30) configuré pour capturer une image d'une circonférence d'au moins une des au moins deux voitures (200, 300), et
un dispositif de traitement d'image (40) configuré pour traiter l'image pour détecter la forme spécifique (400) projetée par le dispositif de projection (20) dans l'image, dans lequel
le dispositif de projection (20) est configuré pour changer une configuration de la forme spécifique (400) et/ou une couleur de la forme spécifique (400) sur la base d'une condition de conduite d'au moins une des au moins deux voitures (200, 300) et pour projeter la forme spécifique changée (401, 402) sur le sol sous-jacent entre les au moins deux voitures (200, 300),
le dispositif d'entrée (10) comprend une première unité d'entrée (11) attribuée à une voiture (200) des au moins deux voitures (200, 300) et au moins une seconde unité d'entrée (12) attribuée à au moins une autre voiture (300) des au moins deux voitures (200, 300),
le dispositif de sortie (50) comprend une première unité de sortie (51) attribuée à l'une voiture (200) des au moins deux voitures (200, 300) et au moins une seconde unité de sortie (52) attribuée à l'au moins une autre voiture (300) des au moins deux voitures (200, 300),
le dispositif de capture d'image (30) comprend une première unité de capture d'image (31) attribuée à l'une voiture (200) des au moins deux voitures (200, 300) et au moins une seconde unité de capture d'image (32) attribuée à l'au moins une autre voiture (300) des au moins deux voitures (200, 300),
le dispositif de traitement d'image (40) comprend une première unité de traitement d'image (41) attribuée à l'une voiture (200) des au moins deux voitures (200, 300) et au moins une seconde unité de traitement d'image (42) attribuée à l'au moins une autre voiture (300) des au moins deux voitures (200, 300),
le dispositif de projection (20) comprend une première unité de projection (21) installée dans l'une voiture (200) des au moins deux voitures (200, 300) et au moins une seconde unité de projection (22) installée dans l'au moins une autre voiture (300) des au moins deux voitures (200, 300), dans lequel la première unité de projection (21) et l'au moins une seconde unité de projection (22) sont chacune configurées pour projeter une partie respective de la lumière indiquant la connexion entre les au moins deux voitures et/ou d'une lumière indiquant que la connexion entre les au moins deux voitures (200, 300) est interrompue, ou
la première unité de projection (21) ou l'au moins une seconde unité de projection (22) est configurée pour projeter la lumière indiquant la connexion entre les au moins deux voitures et/ou la lumière indiquant que la connexion entre les au moins deux voitures (200, 300) est interrompue, et
le système (100) comprend en outre facultativement un dispositif de transmission (60) incluant une première unité de transmission (61) attribuée à l'une voiture (200) des au moins deux voitures (200, 300) et au moins une seconde unité de transmission (62) attribuée à l'au moins une autre voiture (300) des au moins deux voitures (200, 300), la première unité de transmission (61) et l'au moins une seconde unité de transmission (62) étant configurées pour communiquer l'une avec l'autre,
la première unité de projection (21) est configurée pour projeter une lumière indiquant une offre d'établir une connexion à l'au moins une autre voiture (300) des au moins deux voitures (200, 300) si la première unité d'entrée (11) reçoit une entrée pour déclencher l'établissement de la connexion entre les au moins deux voitures (200, 300),
l'au moins une seconde unité de capture d'image (32) est configurée pour capturer une image de la circonférence de l'au moins une autre voiture (300) des au moins deux voitures (200, 300),
l'au moins une seconde unité de traitement d'image (42) est configurée pour traiter l'image de la circonférence de l'au moins une autre voiture (300) des au moins deux voitures (200, 300) pour détecter la lumière projetée indiquant l'offre d'établir la connexion à l'au moins une autre voiture (300), et pour identifier l'une voiture (200) depuis laquelle la lumière indiquant l'offre d'établir la connexion à l'au moins une autre voiture (300) est projetée,
l'au moins une seconde unité de sortie (52) est configurée pour sortir une notification que l'une voiture offre d'établir une connexion à l'au moins une autre voiture (300) si l'au moins une seconde unité de traitement d'image (42) détecte la lumière projetée indiquant l'offre d'établir la connexion à l'au moins une autre voiture (300),
l'au moins une seconde unité d'entrée (12) est configurée pour recevoir une entrée pour accepter d'établir la connexion, et
la connexion entre l'une voiture et l'au moins une autre voiture est établie si l'au moins une seconde unité d'entrée (12) reçoit l'entrée pour accepter d'établir la connexion.

2. Système (100) selon la revendication 1, dans lequel le dispositif de traitement d'image (40) est configuré pour traiter l'image pour déterminer la condition de conduite, en particulier une condition de conduite dans laquelle l'au moins une des au moins deux voitures (200, 300) tourne, ou change de voie, de l'au moins un des au moins deux voitures (200, 300).

3. Système (100) selon la revendication 1 ou 2, dans lequel le dispositif de traitement d'image (40) est configuré pour traiter l'image pour détecter une distance entre les au moins deux voitures (200, 300) et/ou le fait qu'une voiture (500) autre que les au moins deux voitures (200, 300) est, ou n'est pas, présente entre les au moins deux voitures (200, 300), et pour déterminer que la connexion entre les au moins deux voitures (200, 300) est interrompue si la distance est supérieure à une valeur prédéterminée et/ou si la voiture (500) autre que les au moins deux voitures (200, 300) est présente entre les au moins deux voitures (200, 300), et
le dispositif de projection (20) est configuré pour arrêter la projection de la lumière indiquant la connexion entre les au moins deux voitures (200, 300) et pour projeter une lumière indiquant que la connexion entre les au moins deux voitures (200, 300) est interrompue en projetant une forme dédiée (403-1, 403-2) sur le sol sous-jacent entre les au moins deux voitures (200, 300) si le dispositif de traitement d'image (40) détermine que la connexion entre les au moins deux voitures (200, 300) est interrompue.

4. Système (100) selon la revendication 3, dans lequel le dispositif de sortie (50) est configuré pour sortir une notification que la connexion entre les au moins deux voitures (200, 300) est interrompue si le dispositif de traitement d'image (40) détermine que la connexion entre les au moins deux voitures (200, 300) est interrompue.

5. Système (100) selon la revendication 3 ou 4, dans lequel le dispositif de sortie (50) est configuré pour sortir une instruction quant à des actions de conduite pour permettre un rétablissement de la connexion entre les au moins deux voitures (200, 300) si le dispositif de traitement d'image (40) détermine que la connexion entre les au moins deux voitures (200, 300) est interrompue.

6. Système (100) selon l'une quelconque des revendications 3 à 5, dans lequel le système (100) est configuré pour automatiquement rétablir la connexion entre les au moins deux voitures (200, 300) si le dispositif de traitement d'image (40) détermine que la connexion entre les au moins deux voitures (200, 300) est interrompue et, après cela, détermine que la distance est inférieure à la valeur prédéterminée et/ou la voiture (500) autre que les au moins deux voitures (200, 300) n'est plus présente entre les au moins deux voitures (200, 300).

7. Système selon l'une quelconque des revendications 1 à 6, dans lequel la première unité de capture d'image (31) est configurée pour capturer une image d'une circonférence de l'une voiture (200) des au moins deux voitures (200, 300),
la première unité de traitement d'image (41) est configurée pour traiter l'image capturée par la première unité de capture d'image (31) pour identifier l'au moins une autre voiture des au moins deux voitures (200, 300) dans l'image,
la première unité de sortie (51) est configurée pour sortir une liste de l'au moins une autre voiture des au moins deux voitures (200, 300) identifiées par la première unité de traitement d'image (41),
la première unité d'entrée (11) est configurée pour recevoir une entrée pour sélectionner au moins une autre voiture de la liste de l'au moins une autre voiture (300) pour déclencher l'établissement de la connexion entre l'une voiture et l'au moins une autre voiture (300),
la première unité de transmission (61) est configurée pour transmettre, à l'au moins une seconde unité de transmission (62), une notification notifiant que l'une voiture demande d'établir une connexion entre l'une voiture et l'au moins une autre voiture si la première unité d'entrée (11) reçoit l'entrée pour sélectionner l'au moins une autre voiture de la liste de l'au moins une autre voiture (300),
l'au moins une seconde unité de sortie (52) est configurée pour sortir la notification notifiant que l'une voiture demande d'établir une connexion entre l'une voiture et l'au moins une autre voiture,
l'au moins une seconde unité d'entrée (12) est configurée pour recevoir une entrée pour accepter d'établir la connexion, et
la connexion entre l'une voiture et l'au moins une autre voiture (300) est établie si l'au moins une seconde unité d'entrée (12) reçoit l'entrée pour accepter d'établir la connexion.
